(19) **Europäisches Patentamt / European Patent Office / Office européen des brevets**

(11) **EP 4 190 555 A1**

(12) **EUROPEAN PATENT APPLICATION**
published in accordance with Art. 153(4) EPC

(43) Date of publication:
**07.06.2023 Bulletin 2023/23**

(21) Application number: **21853822.1**

(22) Date of filing: **19.07.2021**

(51) International Patent Classification (IPC):
**B32B 17/10** (2006.01)     **B32B 27/06** (2006.01)
**C03C 17/34** (2006.01)     **B32B 7/12** (2006.01)

(52) Cooperative Patent Classification (CPC):
**B32B 7/12; B32B 17/10; B32B 27/06; C03C 17/34**

(86) International application number:
**PCT/JP2021/027003**

(87) International publication number:
**WO 2022/030239 (10.02.2022 Gazette 2022/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.08.2020 JP 2020131905**

(71) Applicant: **Nitto Denko Corporation**
**Ibaraki-shi, Osaka 567-8680 (JP)**

(72) Inventors:
- **MURASHIGE, Takeshi**
  **Ibaraki-shi, Osaka 567-8680 (JP)**
- **INAGAKI, Junichi**
  **Ibaraki-shi, Osaka 567-8680 (JP)**
- **SATO, Keisuke**
  **Ibaraki-shi, Osaka 567-8680 (JP)**
- **KISHI, Atsushi**
  **Ibaraki-shi, Osaka 567-8680 (JP)**

(74) Representative: **Grünecker Patent- und Rechtsanwälte**
**PartG mbB**
**Leopoldstraße 4**
**80802 München (DE)**

(54) **MULTILAYER STRUCTURE**

(57)     A multilayer structure includes one or more resin layers; and a glass layer laminated over the resin layers via bonding layers, wherein when $\rho_0$ is a critical radius of curvature at which the glass layer does not break even though the multilayer structure being bent so that the glass layer is inside, a ratio $t/\rho_0$ of a thickness $t$ of the glass layer to the critical radius of curvature $\rho_0$ is 0.001 or more and 0.02 or less.

**EP 4 190 555 A1**

**Description**

TECHNICAL FIELD

The present invention relates to a multilayer structure.

BACKGROUND ART

In recent years, various devices such as display devices and lighting devices have become thinner from the standpoint of ease of transport, storage, and design. These devices typically employ film-like members, which are continuously produced by the roll-to-roll process. The roll-to-roll process often requires flexible materials that can be worked and processed, and the use of thin glass plates has been proposed for such flexible materials. However, thin glass is very brittle and poor in handling, and thus, flexible substrates made of a resin film attached to a glass surface have been proposed because such flexible substrates have improved reinforcement and handling properties.

RELATED ART DOCUMENT

[Patent Document]

[Patent Document 1] Japanese Unexamined Patent Application Publication No. 2007-010834

SUMMARY OF THE INVENTION

[PROBLEM TO BE SOLVED BY THE INVENTION]

As an example of the flexible substrates, a multilayer structure in which a thin glass layer is laminated over a resin layer via a bonding layer is given. However, the multilayer structure has yet to achieve sufficient handling properties; in particular, it appears to be a challenge to prevent the breaking of the glass layer caused by bending.
Accordingly, one aspect of the present invention has been made in view of the above-described point, and it is an object to provide a multilayer structure in which a glass layer does not break even though the multilayer structure being bent at a desired radius of curvature.

[MEANS FOR SOLVING THE PROBLEM]

In one aspect according to the present invention, a multilayer structure includes one or more resin layers; and a glass layer laminated over the resin layers via bonding layers, wherein when $\rho_0$ is a critical radius of curvature at which the glass layer does not break even though the multilayer structure being bent so that the glass layer is inside, a ratio $t/\rho_0$ of a thickness t of the glass layer to the critical radius of curvature $\rho_0$ is 0.001 or more and 0.02 or less.

[ADVANTAGEOUS EFFECT OF THE PRESENT INVENTION]

The disclosed technology provides a multilayer structure in which a glass layer does not break even though the multilayer structure being bent at a desired radius of curvature.

[BRIEF DESCRIPTION OF THE DRAWINGS]

[Fig. 1] Fig. 1 is a cross-sectional view illustrating a multilayer structure according to a first embodiment.
[Fig. 2] Fig. 2 is a cross-sectional view illustrating multilayer structures 10A and 10B that serve as test samples.
[Fig. 3] Fig. 3 is a plan view illustrating the multilayer structures 10A and 10B that serve as test samples.
[Fig. 4] Fig. 4 is a schematic view illustrating a two-point bending test.
[Fig. 5] Fig. 5 is a graph illustrating results of calculated breaking stress $\sigma$.
[Fig. 6] Fig. 6 is a graph illustrating a change in the breaking stress $\sigma$ when the thickness or material of a resin layer is changed.
[Fig. 7] Fig. 7 is a graph illustrating examples of a relationship between $\Delta U$ and $\rho$.
[Fig. 8] Fig. 8 is a diagram illustrating a radius of curvature of a multilayer structure.
[Fig. 9] Fig. 9 is a diagram illustrating a minute radius of curvature of a multilayer structure.

[Fig. 10] Fig. 10 is a cross-sectional view illustrating a multilayer structure according to a modification of the first embodiment.

EMBODIMENTS FOR CARRYING OUT THE INVENTION

In the following, embodiments according to the present invention will be described in detail with reference to the accompanying drawings. Note that in order to make the description easier to understand, the same elements throughout the drawings are assigned the same reference codes, and duplicate descriptions are omitted.

[Multilayer Structure]

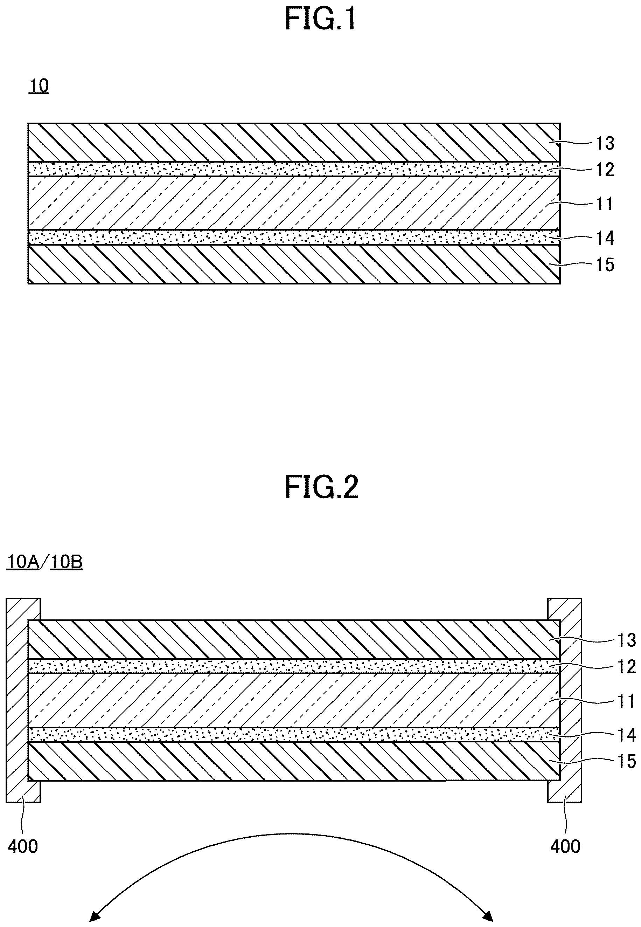

Fig. 1 is a cross-sectional view illustrating a multilayer structure according to a first embodiment. As illustrated in Fig. 1, the multilayer structure 10 includes a glass layer 11, a bonding layer 12, a resin layer 13, a bonding layer 14, and a resin layer 15. In the multilayer structure 10, the resin layer 13 is laminated over one side of the glass layer 11 via the bonding layer 12, and the resin layer 15 is laminated over the other side of the glass layer 11 via the bonding layer 14.

The multilayer structure 10 may have various planar shapes (as viewed from the normal direction of one side of the glass layer 11), examples of which include rectangular, circular, elliptical, a combination of these shapes, or any other suitable shape. The multilayer structure 10 is flexible, and is thus easily attached to curved surfaces.

The following describes materials and the like for each component of the multilayer structure 10.

[Glass Layer]

A material for the glass layer 11 is not particularly specified and may be adopted as appropriate for different purposes. According to the classification by composition, examples of materials for the glass layer 11 may include, for example, soda-lime glass, borate glass, aluminosilicate glass, quartz glass, and the like. In addition, according to the classification by alkali components, examples of the glass 11 may include alkali-free glass and low-alkali glass. The content of the alkali metal component (e.g., $Na_2O$, $K_2O$, $Li_2O$) of the above-described glass is preferably 15 wt% or less, and more preferably 10 wt° or less.

The thickness of the glass layer 11 is, for example, 10 μm or more and 200 μm or less. Herein, a glass layer with a thickness of 10 μm to 200 μm indicates a glass layer with an average thickness of 10 μm to 200 μm.

In view of the surface hardness, airtightness, and corrosion resistance of glass, the thickness of the glass layer 11 is preferably 10 μm or more. In addition, since the single glass layer 11 is desired to have flexibility like a film in order to obtain a curved surface structure, the thickness of the glass layer 11 is preferably 200 μm or less. In particular, the thickness of the glass layer 11 is more preferably 50 um to 200 μm.

The elastic modulus of the glass layer 11 is, for example, 60 MPa or more and 80 MPa or less. From the standpoint of stiffness, the elastic modulus of the glass layer 11 is preferably 60 MPa or more, and is more preferably 65 MPa or more. From the standpoint of flexibility, the elastic modulus of the glass layer 11 is preferably 80 MPa or less, and is more preferably 75 MPa or less.

The optical transmittance of the glass layer 11 at a wavelength of 550 nm is preferably 85% or more. The refractive index of the glass layer 11 at a wavelength of 550 nm is preferably 1.4 to 1.65. The density of the glass layer 11 is preferably 2.3 $g/cm^3$ to 3.0 $g/cm^3$, and more preferably 2.3 $g/cm^3$ to 2.7 $g/cm^3$.

A forming method of the glass layer 11 is not particularly specified, and an appropriate forming method may be adopted according to different purposes. Typically, the glass layer 11 may be formed by melting a mixture containing a main raw material such as silica or alumina, an antifoaming agent such as mirabilite or antimony oxide, and a reducing agent such as carbon, at a temperature of approximately 1400°C to 1600°C; forming the melted mixture into a thin sheet; and then cooling the thin sheet. Examples of the forming method of the glass layer 11 include the throttle-down method, fusion method, float method, and the like. The glass layer formed into a thin sheet by these methods may be chemically polished with a solvent such as hydrofluoric acid, if necessary, in order to thin it or increase smoothness.

[Resin Layer]

The resin layers 13 and 15 are layers that reinforce the glass layer 11 and have flexibility. The resin layers 13 and 15, collectively, might be one or more layers. When the resin layers 13 and 15 include two or more layers, the two or more resin layers may preferably be laminated with an intervening coherent layer that has an adhesive function. From the standpoint of reinforcement, the thickness of each of the resin layers 13 and 15 may be 10 um or more and 200 μm or less, preferably 20 μm or more and 100 μm or less, and more preferably 20 um or more and 50 μm or less.

The elastic moduli of the resin layers 13 and 15 are, for example, 1 MPa to 10 MPa. The elastic moduli of the resin layers 13 and 15 are preferably 1 MPa or more, and more preferably 3 MPa or more, from the standpoint of stiffness.

The elastic moduli of the resin layers 13 and 15 are preferably 10 MPa or less, and more preferably 7 MPa or less, from the standpoint of flexibility.

Examples of materials for the resin layers 13 and 15 include a polyester resin such as a polyethylene terephthalate resin or a polyethylene naphthalate resin, a cycloolefin resin such as a norbornene resin, a polyethersulfone resin, a polycarbonate resin, an acrylic resin, a polyolefin resin, a polyimide resin, a polyamide resin, a polyimide amide resin, a polyarylate resin, a polysulfone resin, a polyetherimide resin, a urethane resin, and the like. The materials of the resin layer 13 and the resin layer 15 may be the same or different. The resin layer 13 and the resin layer 15 may each include multiple layers. For example, a resin layer may include resin having optical functions of a polarizing plate and a retardation plate.

[Bonding layer]

The bonding layers 12 and 14 may be made of any suitable adhesive or pressure-sensitive adhesive. Examples of materials for the adhesive include an ultraviolet-curable acrylic adhesive, an ultraviolet-curable epoxy adhesive, a thermosetting epoxy adhesive, a thermosetting melamine adhesive, a thermosetting phenolic adhesive, an ethylene vinyl acetate (EVA) interlayer, a polyvinyl butyral (PVB) interlayer, and the like. Examples of materials for the pressure-sensitive adhesive include an acrylic pressure-sensitive adhesive, a silicone pressure-sensitive adhesive, a rubber pressure-sensitive adhesive, and the like. The thickness of the bonding layers 12 and 14 is not particularly specified, but may, for example, be 0.1 $\mu$m or more and 500 $\mu$m or less, preferably 0.1 um or more and 50 $\mu$m or less, and more preferably 0.1 $\mu$m or more and 5 $\mu$m or less. A bonding layer with the thickness within the above range may be appropriately designed to provide a reinforcing effect on the resin layer.

In this specification, a pressure-sensitive adhesive refers to a layer that is adhesive at room temperature and adheres to an adherend under light pressure. Therefore, the pressure-sensitive adhesive retains a practical adhesive force even when the adherend adhered to the pressure-sensitive adhesive is peeled off. An adhesive, on the other hand, is a layer that can bind substances together by intervening between them. Therefore, when the adherend adhered to the adhesive is peeled off, the adhesive has no practical adhesive force.

[Manufacturing Method of Multilayer Structure]

The multilayer structure 10 is obtained by laminating the glass layer 11, and the resin layers 13 and 15 via bonding layers 12 and 14, where the glass layer 11 is formed into a predetermined shape by, for example, an overflow method, a float method, a down-draw method, or a press working method. Alternatively, the multilayer structure 10 may be obtained by continuously laminating the glass layer 11 and the resin layers 13 and 15 via the bonding layers 12 and 14 using the roll-to-roll process, and then cutting the laminated product into pieces of a desired size by pressing or laser processing.

[Strength Against Bending of Multilayer Structure]

Ultra-thin glass such as a glass layer 11 has inherent dimensional stability, barrier properties, and surface hardness of glass, as well as flexibility. However, the ultra-thin glass has a major drawback in handling properties due to its fragility. This makes it difficult to handle a single glass layer 11 by itself.

In the multilayer structure 10, the resin layers 13 and 15 are laminated to reinforce the ultra-thin glass layer 11, which not only improves the handling of the ultra-thin glass layer 11, but also facilitates the transfer of the ultra-thin glass layer 11 in the roll-to-roll process. In addition, new applications may be derived by providing the resin layers 13 and/or 15 with an optical function.

Since the multilayer structure 10 includes the resin layers 13 and 15 laminated on the glass layer 11, the multilayer structure 10 has excellent handling properties, and in particular, its strength against bending is greatly improved compared to that of the glass layer 11 by itself. The results of examination by the inventors on the strength against bending are described below.

Breaking of the glass layer is caused by tearing stress on minute cracks. Breaking by tearing stress is dominantly caused by bending of the glass layer. Therefore, when a minute crack occurs in the glass layer, the glass layer is liable to break due to its flexibility. Accordingly, in order to verify the effect of reinforcement by laminating a resin layer, the inventors simulated the deformation of the glass layer caused by bending, and tested whether the growth of cracks in the glass layer could be prevented by lamination of the resin layer when a minute crack was intentionally made in the glass layer.

Specifically, a 50 mm $\times$ 110 mm glass film ("OA-10G": thickness 50 um, manufactured by Nippon Electric Glass Co., Ltd.) was prepared as the glass layer 11, resin films (manufactured by Mitsubishi Chemical Corporation.) was prepared as the resin layers 13 and 15, an ultraviolet cross-linking resin (manufactured by Daicel Corporation.) and a pressure-sensitive adhesive (manufactured by Nitto Denko Corporation.) were prepared as the bonding layers 12 and 14. The ultraviolet cross-linking resin corresponds to the aforementioned adhesive, and the pressure-sensitive adhesive corresponds to the aforementioned pressure-sensitive adhesive.

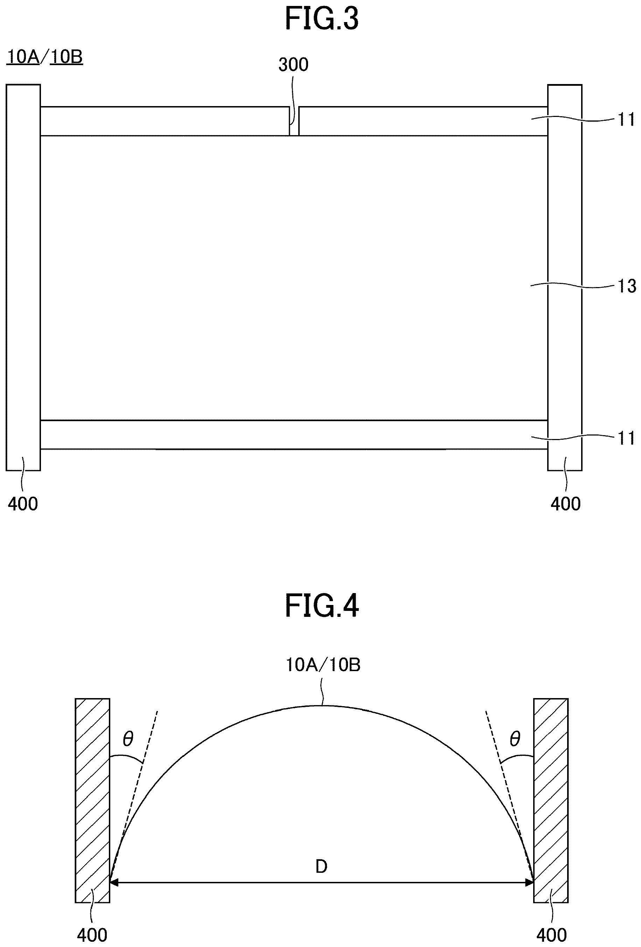

Then, multilayer structure 10A and 10B were prepared as test samples, where the multilayer structure 10A was formed by laminating the glass film, and the resin films via ultraviolet cross-linking resins, and the multilayer structure 10B was formed by laminating the glass film, and the resin films via pressure-sensitive adhesives. Fig. 2 is a cross-sectional view illustrating the multilayer structures 10A and 10B, and Fig. 3 is a top view illustrating the multilayer structures 10A and 10B.

As illustrated in Fig. 2, cross-sectional structures of the multilayer structures 10A and 10B serving as the test samples are similar to those in Fig. 1. However, as illustrated in Fig. 3, in order to facilitate cracking, both ends of the glass layer 11 in the longitudinal direction protrude from the resin layers 13 and 15, and a crack 300 is formed in the protrusion on one side of the glass layer 11. Note that components 400 form a test jig that sandwiches both ends of the multilayer structure 10A or 10B in the longitudinal direction, and the multilayer structure 10A or 10B may be bent in the direction of a double-sided arrow illustrated in Fig. 2 by bringing the distance between the opposing components 400 closer to each other.

Next, a two-point bending test was conducted. In the two-point bending test, the multilayer structures 10A and 10B were bent in the longitudinal direction (arrow direction in Fig. 2). Fig. 4 schematically illustrates the two-point bending test. Herein, the bending degree of the multilayer structures 10A and 10B was varied by adjusting an interval between the components 400 of the test jig, and a distance D at which the glass layer 11 broke was measured.

Note that in this application, breaking of the glass layer 11 means that the glass layer 11 breaks and separates into 2 or more parts. In other words, a state in which only a crack 300 is inserted in the glass layer 11 as illustrated in Fig. 3 is not a state in which the glass layer 11 breaks. When the crack 300 on one side in Fig. 3 penetrates to the other side, and the glass layer 11 breaks up into 2 or more parts, the glass layer 11 is considered to be in a broken-up state.

Next, based on the measured distance D, the breaking stress σ of the glass layer 11 (the stress at which the glass layer 11 breaks when the multilayer structure 10 is bent) was calculated using the following Formula (1). In Formula (1), t is the thickness of the glass layer 11, E is the elastic modulus of the glass layer 11, and θ is the angle between a normal to an upper surface of the glass layer 11 before bending and the tangent of an end of the glass layer 11 at distance D.
[Formula 1]

$$\sigma = 1.198\left(\frac{Et}{D-t}\right)\sqrt{\cos\theta} \qquad \cdots (1)$$

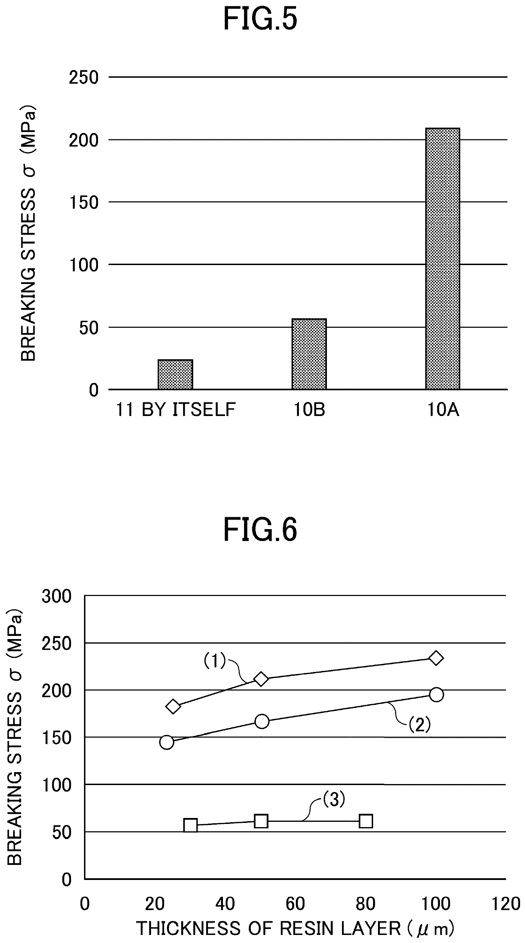

Fig. 5 illustrates results of the calculated breaking stress σ. In Fig. 5, "11 by itself" indicates comparative data, which is data for a state of the glass layer 11 by itself with no laminated resin layer. Fig. 5 illustrates that the breaking was prevented by laminating the resin layers 13 and 15, compared to the state of the glass layer 11 by itself, which broke at approximately 20 MPa when cracks appeared in the glass layer 11.

As illustrated in Fig. 5, the breaking stress σ of the multilayer structure 10B using pressure-sensitive adhesive is approximately twice that of the glass layer 11 by itself, and the breaking stress σ of the multilayer structure 10A using ultraviolet cross-linking resin is approximately 10 times that of the glass layer 11 by itself. That is, although a certain effect may be obtained by using a pressure-sensitive adhesive as the bonding layers 12 and 14, the breaking stress σ may be greatly improved by using an adhesive as the bonding layers 12 and 14.

From the standpoint of preventing the breaking of the glass layer 11 caused by bending of the multilayer structure 10, a preferred radius of curvature of the multilayer structure 10 when the pressure-sensitive adhesive is used as the bonding layers 12 and 14 is 50 to 300 mm, and a preferred radius of curvature of the multilayer structure 10 when an adhesive is used as the bonding layers 12 and 14 is 2 mm to 150 mm.

Next, the breaking stress σ was obtained by changing the thickness and material of the resin layers 13 and 15 without changing the bonding layers 12 and 14, results of which were illustrated in Fig. 6. In Fig. 6, (1) indicates results of polyethylene terephthalate resin with an elastic modulus of 4.8 GPa, (2) indicates results of cycloolefin resin with an elastic modulus of 2.1 GPa, and (3) indicates results of polyethylene resin with an elastic modulus of 0.3 GPa.

Fig. 6 indicates that the higher the elastic moduli of the resin layers 13 and 15, the greater the breaking stress σ. In addition, although the breaking stress σ of the polyethylene resin in (3) hardly changed with increasing thickness, the breaking stress o of the polyethylene terephthalate resin in (1) or the breaking stress σ of the cycloolefin resin in (2) increased with an increase in thickness. This illustrates that the higher the elastic moduli and thicker the resin layers 13 and 15, the greater the reinforcing effect on the glass layer 11, and in particular, the greater the contribution of the elastic moduli. In other words, in order to obtain the reinforcing effect on the glass layer 11, it is preferable to select a material with a high elastic modulus for the resin layers 13 and 15.

Herein, assume that t is a thickness of the glass layer and $\rho_0$ is a critical radius of curvature at which the glass layer 11 does not break even though the multilayer structure 10 being bent so that the glass layer 11 is inside. In this condition, when a ratio $t/\rho_0$ of the thickness t of the glass layer 11 to the critical radius of curvature $\rho_0$ is 0.001 or more and 0.02 or less, the multilayer structure 10 in which the glass layer 11 does not break even though the multilayer structure being bent with the critical radius of curvature $\rho_0$ may be obtained. In addition, when the above conditions are satisfied, the progress of a crack and the increase in the number of cracks may be prevented not only in the case of the glass layer 11 with fine cracks that tend not to lead to breaking and but also in the case of the glass layer 11 with linear cracks that tend to lead to breaking. The value of 0.001 may be derived from results of the bending tests of a glass layer 11 by itself having no laminated resin layers 13 and 15, and the value of 0.02 may be derived from results of the bending tests of a multilayer structure 10 having the resin layers 13 and 15 with sufficient thickness laminated over the glass layer 11.

In other words, if a target value of the critical radius of curvature $\rho_0$ is determined, a range of the thickness t of the glass layer 11 is determined. Thus, the multilayer structure 10 in which the glass layer 11 does not break even though the multilayer structure being bent at the critical radius of curvature $\rho_0$ may be obtained by designing the thickness t of the glass layer 11 to fall within that range.

For example, when the multilayer structure 10 is transported by the roll-to-roll process, the multilayer structure 10 bends at a roll portion. However, if the radius of curvature of the multilayer structure 10 at the roll portion is obtained in advance, the breaking of the glass layer 11 while transporting the multilayer structure 10 using the roll-to-roll process may be prevented by designing the thickness t of the glass layer 11 so as not to break at the radius of curvature.

Note that "bending so that the glass layer 11 is inside" means bending so that the resin layer is present outside the glass layer 11. The resin layer outside the glass layer 11 may be the resin layer 13 or the resin layer 15. That is, when a resin layer is laminated over both sides of the glass layer 11, the multilayer structure 10 may be bent so that any one of resin layers 13 or 15 is outside the glass layer 11.

Next, based on the Griffith's theory, the inventors have attempted to consider the mechanism by which the laminated resin layers can reinforce a glass layer despite the elastic moduli of the resin layers being as small as 1/10 of that of the glass layer. The Griffith's theory states that the glass layer breaks when the energy state at which the breaking occurs is lower than the energy state at which the break does not occur.

In other words, in consideration of a given radius of curvature p, when $U_1$ denotes an internal energy in the case where no breaking occurs, and $U_2$ denotes an internal energy in the case where breaking occurs, the boundary condition for breaking to occur is in the case where $\Delta U = U_1 - U_2$ is 0. That is, the breaking of the glass layer occurs in the case where $\Delta U \geq 0$.

Herein, in a case where t is a thickness of a given material, an elastic energy $\Psi$ with a radius of curvature $\rho$ in an elastic deformation region is expressed by Formula (2). In Formula (2), E denotes the elastic modulus and $\eta$ denotes a variable in the thickness direction.

[Formula 2]

$$\Psi = \int_t \frac{E}{\rho^2} \eta^2 d\eta \qquad \cdots (2)$$

Using Formula (2), $U_2$ is given by Formula (3), and $\Delta U$ of the multilayer structure made of glass and resin layers is given by Formula (3). In Formula (3), E is the elastic modulus, t is the thickness, a subscript g is the glass layer, and a subscript p is the resin layer. $\Delta G$ is a release energy due to the breaking of the glass layer, and $\Delta G = 0.11$ J is set from the results of bending tests on a single glass layer.

[Formula 3]

$$\Delta U = U_1 - U_2 = \frac{E_g t_g^3}{12\rho^2} - \frac{3E_p}{4\rho^2} t_p t_g^2 - \Delta G \qquad \cdots (3)$$

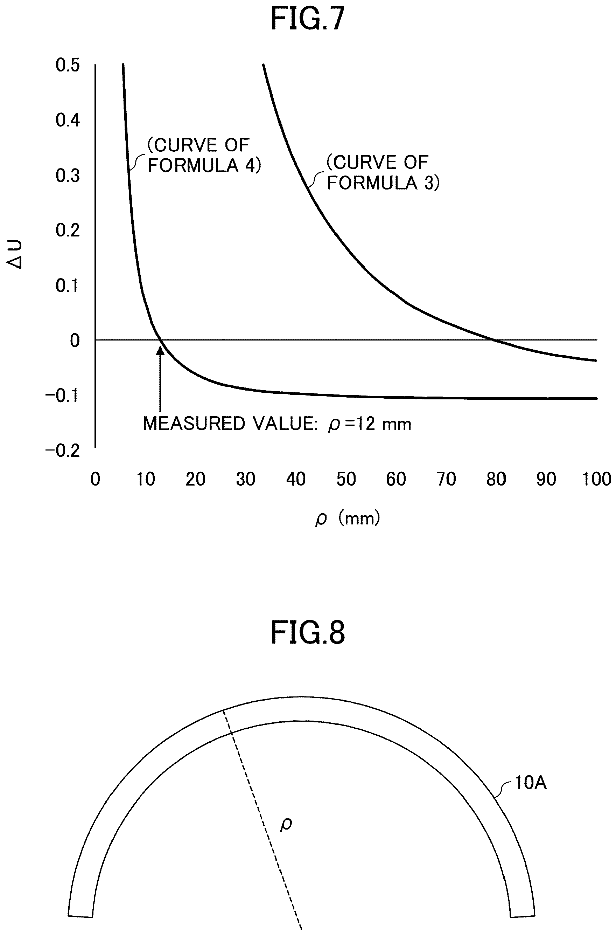

Using Formula (3) to determine the value at which $\Delta U$ is 0 for a given multilayer structure, $\rho = 80$ mm was obtained as illustrated in (Curve of Formula (3)) in Fig. 7. However, in this multilayer structure, the measured value of the critical radius of curvature at which the glass layer actually breaks was $\rho = 12$ mm, and the value at which $\Delta U$ is 0 in Formula (3) resulted in a large discrepancy from the measured value. In addition, the curve in Fig. 7 (Curve of Formula 3) was almost the same as that in the case of a single glass layer by itself with no laminated resin layer.

Therefore, the inventors hypothesized that when the glass layer actually broke, the resin layer would deform due to a radius of curvature that is smaller than the radius of curvature $\rho$. Then, Formula (4) was derived by modifying Formula (3) with a radius of curvature as $\rho_m$. In other words, the characteristic of Formula (4) is an introduction of a minute radius of curvature $\rho_m$ of the glass layer into the Formula (4).

[Formula 4]

$$\Delta U = \frac{E_g t_g^3}{12\rho^2} + \frac{2E_p}{3\rho^2}\left\{(t_p + \frac{t_g}{2})^3 - \left(\frac{t_g}{2}\right)^3\right\}$$

$$-\frac{E_p}{3\rho_m^2}\left\{(t_g + t_p)^3 + t_p^3 - t_g^3\right\} - \Delta G \qquad \cdots (4)$$

In Formula (4), as a result of making the value of k smaller than 1 where $\rho_m = k\rho$ ($0 < k < 1$), the value at which $\Delta U$ is 0 approaches the measured value of $\rho = 12$ mm, as illustrated by (Curve of Formula (4)) in Fig. 7. The curve in Fig. 7 (Curve of Formula (4)) is obtained when Eg = 73 GPa, Ep = 2.1 GPa, tg = 50 $\mu$m, tp = 23 $\mu$m, and k = 0.47.

A result of further detailed examination by the inventors indicated that in the case where $0 < \rho < 50$ mm, $0.4 < k < 0.5$, and $10 \leq t \leq 200$ $\mu$m, the value of $\Delta U = 0$ obtained from Formula (4) matched the actual measured value with high accuracy. In addition, in the case where $0 < p < 50$ mm, $0.4 < k < 0.5$, and $30 \leq t \leq 100$ $\mu$m, the value of $\Delta U = 0$ obtained from Formula (4) matched the actual measured value with higher accuracy.

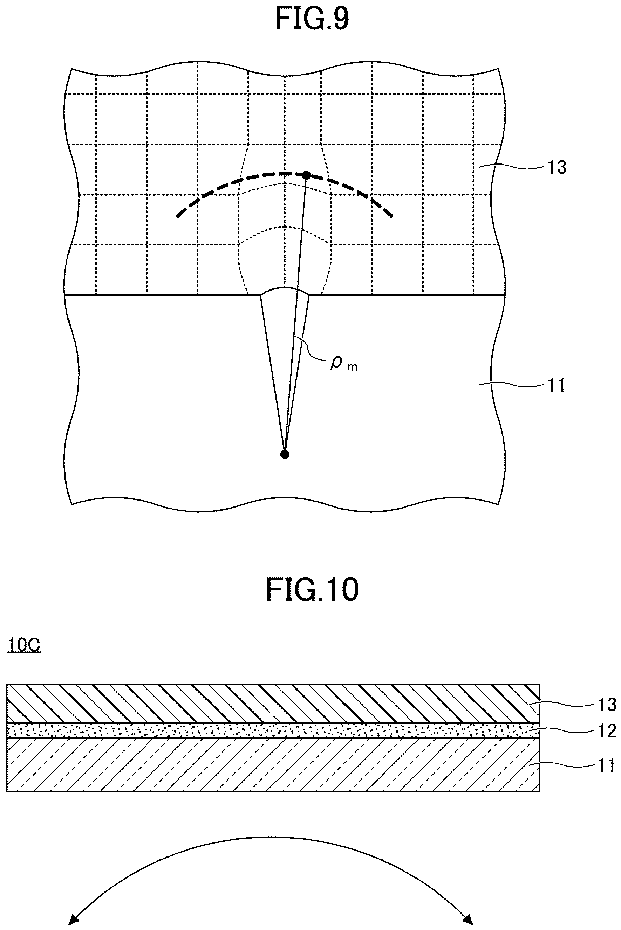

Based on the above examination results, as illustrated in Fig. 8, in the case where the breaking of the glass layer occurs at the radius of curvature $\rho$ in the multilayer structure 10A, the deformation of the resin layer is considered to occur at the radius of curvature $\rho_m$ smaller than the radius of curvature p, as illustrated in Fig. 9. In Fig. 9, the glass layer 11 and the resin layer 13 are illustrated schematically, and illustration of the bonding layer 12 is omitted. The introduction of a minute radius of curvature $\rho_m$ is a technical idea that has not been disclosed in the related art, and the introduction of this technical idea will clarify the relationship between the critical radius of curvature $\rho_0$, the thickness and elastic modulus of the glass layer, and the thickness and elastic modulus of the resin layer when the glass layer breaks.

That is, when a critical radius of curvature $\rho_0$ of the glass layer 11 is set to a desired value so that Eg, Ep, Tg, and Tp are determined to satisfy Formula (5), a multilayer structure 10 in which the glass layer 11 does not break even though the multilayer structure is bent at the critical radius of curvature $\rho_0$ may be obtained. In Formula (5), Eg is the elastic modulus of the glass layer, Ep is the elastic modulus of the resin layer, tg is the thickness of the glass layer, and tp is the thickness of the resin layer, $\rho_m = k\rho_0$ ($0.4 < k < 0.5$), $0 < \rho_0 < 50$ mm, and $\Delta G = 0.11$ J.

[Formula 5]

$$\Delta U < \frac{E_g t_g^3}{12\rho_0^2} + \frac{2E_p}{3\rho_0^2}\left\{(t_p + \frac{t_g}{2})^3 - \left(\frac{t_g}{2}\right)^3\right\}$$

$$-\frac{E_p}{3\rho_m^2}\left\{(t_g + t_p)^3 + t_p^3 - t_g^3\right\} - \Delta G \qquad \cdots (5)$$

Fig. 10 is a cross-sectional view illustrating a multilayer structure according to a modification of the first embodiment. Although the above-described example has been described in which a resin layer is laminated over both sides of a glass layer, the multilayer structure according to the present invention merely needs to have one or more resin layers. In other words, the above-described content also applies when the resin layer 13 is laminated over one side of the glass layer 11, as in the case of the multilayer structure 10C illustrated in Fig. 10. However, when the resin layer 13 is laminated over one side of the glass layer 11, the above-described content applies only when the multilayer structure 10C is bent in the arrow direction of Fig. 10 so that the glass layer 11 is inside.

In the case of laminating a resin layer on both sides of a glass layer, the above-described content applies regardless of which resin layer is outside when the multilayer structure is bent. That is, when the resin layer 13 is laminated over one side of the glass layer 11, there is a restriction on the bending direction so as to prevent the glass layer 11 from breaking, but when the resin layer is laminated over both sides of the glass layer, there is no restriction on the bending direction, which is advantageous for implementing the roll-to-roll process.

Although the preferred embodiments and the like have been described in detail above, it is not limited to the above described embodiment, and various modifications and substitutions may be made to the above described embodiment without deviating from the scope of claims.

This international application claims priority under Japanese Patent Application No. 2020-131905, filed with the Japanese Patent Office on August 3, 2020, and the entire contents of Japanese Patent Application No. 2020-131905 are incorporated herein by reference.

[Description of Reference Codes]

10, 10a, 10b, 10c multilayer structure
11 glass layer
12, 14 bonding layer
13, 15 resin layer

**Claims**

1. A multilayer structure comprising:

    one or more resin layers; and
    a glass layer laminated over the resin layers via bonding layers,
    wherein when $\rho_0$ is a critical radius of curvature at which the glass layer does not break even though the multilayer structure being bent so that the glass layer is inside, a ratio $t/\rho_0$ of a thickness $t$ of the glass layer to the critical radius of curvature $\rho_0$ is 0.001 or more and 0.02 or less.

2. The multilayer structure according to claim 1,

    wherein the multilayer structure satisfies the following Formula (5):
    [Formula 5]

$$\Delta U < \frac{E_g t_g{}^3}{12\rho_0{}^2} + \frac{2E_p}{3\rho_0{}^2}\left\{ (t_p + \frac{t_g}{2})^3 - \left(\frac{t_g}{2}\right)^3 \right\}$$

$$- \frac{E_p}{3\rho_m{}^2}\left\{ (t_g + t_p)^3 + t_p{}^3 - t_g{}^3 \right\} - \Delta G \qquad \cdots (5)$$

    wherein in Formula (5), Eg is an elastic modulus of the glass layer, Ep is an elastic modulus of each of the resin layers, tg is a thickness of the glass layer, and tp is a thickness of the each of the resin layers, $\rho_m = k\rho_0$ (0.4 < k < 0.5), 0 < $\rho_0$ < 50 mm, and $\Delta G$ = 0.11 J.

3. The multilayer structure according to claim 1 or 2,
    wherein the thickness $t$ of the glass layer is 10 $\mu$m or more and 200 $\mu$m or less, and the elastic modulus of the glass layer is 60 MPa or more and 80 MPa or less.

4. The multilayer structure according to any one of claims 1 to 3,
    wherein the thickness of the each of the resin layers is 10 um or more and 200 $\mu$m or less, and the elastic modulus of the each of the resin layers is 1 MPa or more and 10 MPa or less.

5. The multilayer structure according to any one of claims 1 to 4,
    wherein the bonding layers are an adhesive.

6. The multilayer structure according to any one of claims 1 to 5,
    wherein the thickness $t$ of the glass layer is 30 um or more and 100 um or less.

# FIG.1

# FIG.2

# FIG.3

# FIG.4

# FIG.5

# FIG.6

# FIG.7

# FIG.8

# FIG.9

# FIG.10

## INTERNATIONAL SEARCH REPORT

| International application No. |
| --- |
| **PCT/JP2021/027003** |

| A. | CLASSIFICATION OF SUBJECT MATTER |
| --- | --- |

***B32B 17/10***(2006.01)i; ***B32B 27/06***(2006.01)i; ***C03C 17/34***(2006.01)i; ***B32B 7/12***(2006.01)i
FI:    B32B17/10; B32B27/06; B32B7/12; C03C17/34 A

According to International Patent Classification (IPC) or to both national classification and IPC

| B. | FIELDS SEARCHED |
| --- | --- |

Minimum documentation searched (classification system followed by classification symbols)

B32B1/00-43/00; C03C17/34

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2019-55534 A (NITTO DENKO CORP.) 11 April 2019 (2019-04-11) claims, paragraphs [0001], [0004], [0006], [0022], [0023], [0027], [0036], [0041], examples | 1-6 |
| A | 引張り強度, 曲げ弾性率の温度依存性, MITSUI CHEMICALS, INC., [online], 05 October 2021, pp. 1, 2, <URL:https://jp.mitsuichemicals.comsites/default/files/media/document/2018/b-03_yinzhangriqiangduqukedanxinglunowenduyicunxingpdffuairuwokaiku.pdf>, examples, fig. 1, non-official translation (Tensile strength. Temperature dependence of flexural modulus), examples, fig. 1 examples, fig. 1 | 1-6 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 October 2021** | **19 October 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2021/027003**

| Patent document cited in search report | Publication date (day/month/year) | Patent family member(s) | Publication date (day/month/year) |
|---|---|---|---|
| JP 2019-55534 A | 11 April 2019 | (Family: none) | |

Form PCT/ISA/210 (patent family annex) (January 2015)

**EP 4 190 555 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007010834 A

- JP 2020131905 A